# EUROPEAN PATENT APPLICATION

(11) **EP 3 917 183 A1**
(43) Date of publication of application: **01.12.2021**
(21) Application number: 21175890.9
(22) Date of filing: 26.05.2021
(51) Int. Cl.: H04W 4/80, H04W 4/029

(54) **REAL TIME LOCATION SYSTEM FOR TRACKING RFID TAGS**

(30) Priority: 27.05.2020 US 202062704745 P
(71) Applicant: Stanley Convergent Security Solutions, Inc., Fishers, Indiana 46037 (US)
(72) Inventor: MILLMAN, Talila, Eti, Andover, 01810 (US); RECHT, Iftach, Rehovot (IL); MATZA, David, Ramat Gan (IL); AMSALEM, Mr Reuven, 7403635 Ness Ziona (IL)
(74) Representative: SBD IPAdmin

(57) **Abstract**

A location system comprises multiple RFID tags, multiple location receivers, and a central server. Each RFID tag is configured to transmit, in response to a detected stimulus or periodically at predetermined intervals, a wireless message signal that includes an identifier of the RFID tag. Each location receiver is configured to receive the wireless message signals from the RFID tags and to measure RFID tag location information from the wireless message signals. The central server is configured to receive the RFID tag messages and/or the measured RFID tag location information. At least one of the central server and the location receivers is configured to calculate the locations of the RFID tags using the wireless message signals and/or the measured RFID tag location information.

## Description

The present invention relates to location systems, especially to so-called real time locations systems (RTLS), in which mobile wireless devices ("RFID tags" herein) are located, and preferably tracked, by means of wireless signal transmissions. The invention has particular utility in proximity detection, e.g. for tracking / tracing proximity between individuals for infectious disease control, but the invention also has broader utility.

Location systems are used for locating, and preferably tracking, articles and/or people associated with respective wireless devices. Location systems are used in a wide range of environments, including hospitals and other healthcare situations, social care environments, prisons, industrial locations, warehouses, retail stores, educational institutions, offices and logistics environments, for example. Such systems may be used for locating and tracking patients (especially babies and the elderly) and other categories of people, and for locating and tracking medical supplies, equipment, products, tools and other categories of articles.

Location systems use one or more of a variety of wireless technologies, including wireless local area network (WLAN) technologies, wireless personal area network (WPAN) technologies (including low-rate wireless personal area network (LR-WPAN) technologies), radio frequency identification (RFID), ultra-wideband (UWB), cellular, satellite (e.g. global positioning system (GPS)), ultrasound, sound, infrared, visible light, camera vision, etc. Included in WLAN technologies are those conforming to the Institute of Electrical and Electronics Engineers (IEEE) 802.11 series of standards (e.g. Wi-Fi). Included in WPAN and LR-WPAN technologies are those conforming to the IEEE 802.15 series of standards (e.g. BlueTooth®, ZigBee®, etc.).

The mobile wireless devices which are located and tracked in location systems may, for example, be tags, transponders or mobile communications devices, and they may be active and/or passive. For example, active mobile wireless devices may function as "beacons" which periodically emit wireless signals indicating their presence. Passive mobile wireless devices may, for example, function as transponders, only emitting wireless signals in response to wireless signals emitted by wireless emitters of the location system. Some mobile wireless devices may function sometimes as passive devices and at other times as active devices. Depending upon their functionality, the mobile wireless devices may be self-powered (e.g. battery powered) or may obtain their power from the wireless signals emitted by wireless emitters of the location system. Mobile communications devices used in location systems include, for example: mobile (e.g. cellular) telephones, including smart phones; portable computer devices, e.g. tablet computers, laptop computers, handheld computers, personal digital assistants (PDAs), GPS devices; etc.

Location systems use a variety of techniques for calculating the locations of mobile wireless devices. For example, some location systems use the times at which wireless transmissions from mobile wireless devices are received (i.e., time-of-arrival (TOA) information), in order to calculate differences in times-of-arrival between different wireless receivers and to use the calculated time-difference-of-arrival (TDOA) information to calculate the locations of the mobile wireless devices. Alternatively, location systems may use received signal strengths (e.g. received signal strength indication (RSSI)), and/or angle of arrival (AOA) information, and/or round-trip time (RTT) information, radio map fingerprinting information, location information from nearby tags/transponders, satellite location information, etc. In some location systems the mobile wireless devices themselves perform at least part of the location calculations.

A typical location system for locating mobile wireless devices includes at least one wireless receiver (e.g. an access point) configured to receive wireless transmissions from the mobile wireless devices and to transmit (e.g. by wire or other physical conduit or wireless) bursts of device reports concerning the wireless transmissions to a report processor. Each wireless transmission from a mobile wireless device may include some or all of the following information: the identity of the mobile wireless device; the time (e.g. "time stamp") of the wireless transmission; telemetry data (e.g. temperature, pressure, motion status, battery status, and/or other information concerning the mobile wireless device); and/or location information (for those devices which calculate, and/or obtain, information regarding their own location). Each burst of device reports comprises a one or more reports (i.e. data messages) concerning one or more wireless transmissions from a particular mobile wireless device. The wireless transmissions may be transmitted by the mobile wireless device on a plurality of channels, for example. The device reports may comprise any or all of the information which may be included in the wireless transmissions received from the mobile wireless devices and/or may comprise information concerning the wireless receiver (e.g. the identity and/or location of the wireless receiver) and/or may comprise information concerning the wireless transmissions which may be used to calculate the location of the mobile wireless device (e.g. the time(s) of arrival of the wireless transmissions, the received signal strength (e.g. RSSI), the angle of arrival, round-trip time information, radio map fingerprinting information, location information from nearby tags/transponders, satellite location information, etc.).

Another typical location system for locating mobile wireless devices includes at least one wireless transmitter (e.g. an access point or other type of wireless transmitter) configured to transmit wireless transmissions (e.g. beacons) to be received by the mobile wireless devices. The wireless messages received by the mobile devices may be measured (e.g. TOA, RSSI, AOA) and the measurement results wirelessly transmitted to a report processor together with other information. Thus, each wireless transmission from a mobile wireless device may comprise some or all of the following information: the identity of the mobile wireless device; the time (e.g. "time stamp") of the wireless transmission; telemetry data (e.g. temperature, pressure, motion status, battery status, and/or other information concerning the mobile wireless device); location information (for those devices which calculate, and/or obtain, information regarding their own location); and/or information concerning the received wireless transmissions which may be used to calculate the location of the mobile wireless device (e.g. the time(s) of arrival of the wireless transmissions, the received signal strength (e.g. RSSI), the angle of arrival, round-trip time information, radio map fingerprinting information, location information from nearby tags/transponders, satellite location information, etc.).

The mobile device wireless transmission sent to the report processor may be organized in bursts where each burst comprises one or more reports (i.e. data messages) concerning one or more wireless messages received from one or more beacon device. The wireless transmissions in a burst may be transmitted by the mobile device on a plurality of channels, for example.

The device reports may comprise any or all of the information which may be included in the wireless transmissions received from the wireless transmitter and/or may comprise information concerning the wireless transmitter (e.g. the identity and/or location of the wireless transmitter), the transmission power, the transmission channel, etc.

The report processor may, for example, be a so-called "location engine", i.e. a processor configured to receive the device reports and to use them to calculate the location of the mobile wireless device(s). The report processor may be configured to receive the bursts of device reports from the wireless mobile device during burst reception time windows.

The present invention may utilize any or all of the above-described technologies, systems and processes, for example.

The present invention provides a location system according to Claim 1 of the appended claims.

Preferred, and other optional, features of the invention are defined and described in the dependent claims.

Preferred embodiments and implementations of the invention will now be described, by way of example, with reference to the accompanying figures, wherein like reference numerals and symbols represent like elements.
FIG. 1 is a diagram showing elements of a location system according to the invention deployed across an exemplary single-floor map.
FIG. 2 is a diagram showing elements of a location system according to the invention deployed across an exemplary multiple-floor map.
FIG. 3 shows a block diagram of components within an RFID tag used in the location system according to the invention.
FIG. 4 is a flowchart of a method for assigning confidence values to possible contacts, used in the location system according to the invention.

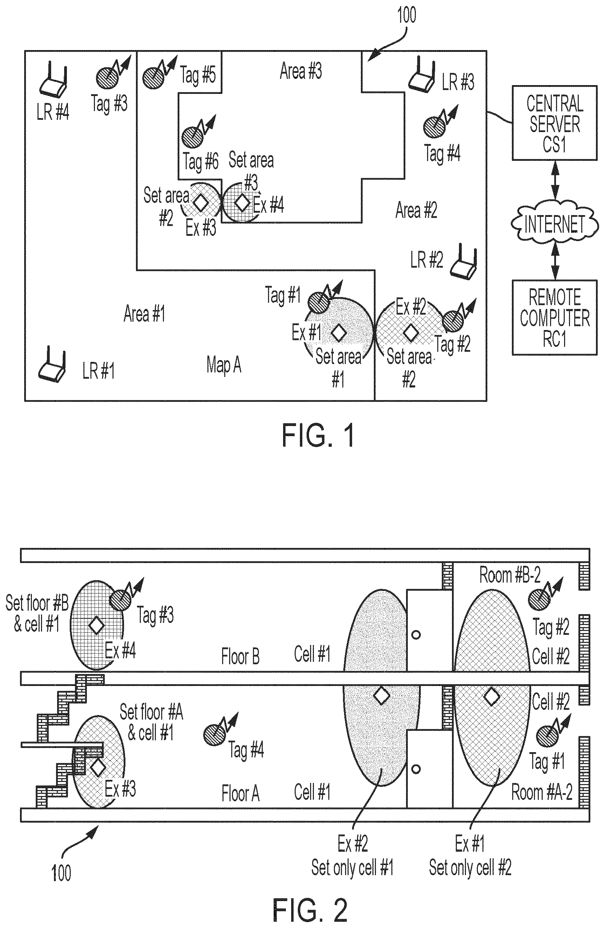

Referring to FIG. 1, a location system 100 installed in a multi-area defined as map A is shown. The multi-area (map A) may include three well defined areas Area #1, Area #2, Area #3. The perimeters of each of the areas Areas #1-#3 may be limited by walls, shown as black lines in FIG. 1. Movement between the different areas Areas #1-#3 may be done through doors which are shown as openings in the walls in Map A (e.g., between Areas #1 and #2 in the right bottom corner and between Areas #2 and #3 in the center of the picture).

Location system 100 may have multiple location receivers LR#1, LR#2, LR#3, LR#4 throughout multi-area (map A). Persons skilled in the art shall recognize that the following description of the preferred embodiments refers to location receivers but it shall be understood that it includes units such WLAN access points, RFID receivers, etc. performing location in a WLAN network or any other wireless communication network.

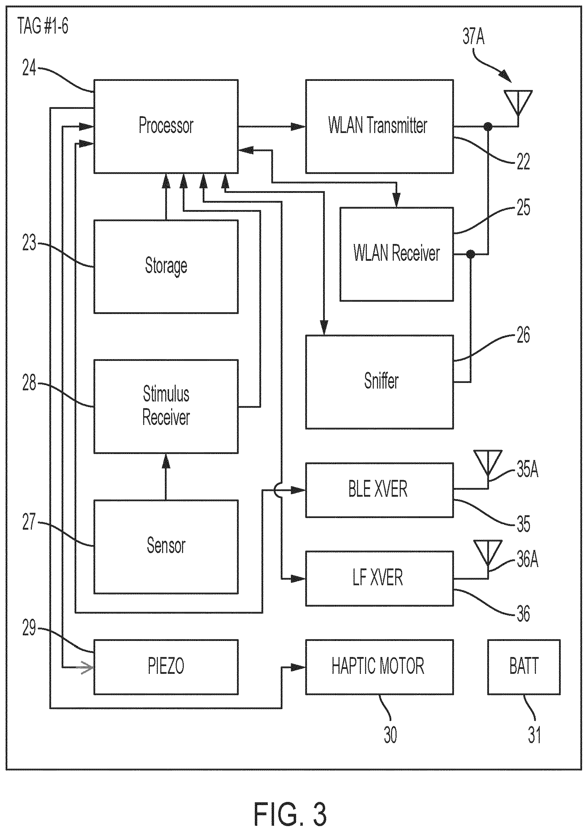

Location system 100 may also have multiple RFID tags (Tag#1, Tag#2, Tag#3, Tag#4, Tag#5, Tag#6) carried by individuals and/or attached to equipment. Referring to FIG. 3, RFID tags Tags#1-#6 may include a transmitter 22, preferably a WLAN (e.g. Wi-Fi ™) transmitter, that transmits signals originated by a processor 24 via an antenna 37A. RFID tags Tags#1-#6 may transmit periodically at predetermined intervals a signal that includes its MAC address and/or other identifier(s) retrieved from storage 23, which may also store processor 24 instructions and data. RFID tags Tags#1-#6 optionally include a receiver 25, preferably a WLAN (e.g. Wi-Fi ™) receiver, for receiving signals from location receivers LR#1, LR#2, LR#3, LR#4 and/or other components of the location system 100.

Receiver 25 is preferably coupled to processor 24 for providing received data and command information to processor 24 and for receiving control information from processor 24. Processor 24 may control a power state of receiver 26, so that receiver 26 is only powered-up when desirable. As an alternative to periodic transmission of presence signals, a stimulus receiver 28 may detect the presence of an external stimulus via a sensor 27.

Sensor 27 may for example be a low-frequency magnetic field detector of a type generally used to activate standard non-WLAN RFID tags or passive re-radiating tags when brought proximate an external exciter. Sensor 27 may additionally or alternatively be an infrared and/or ultrasound sensor that provides added security for presence detection and/or location-finding by activating transmission of a presence and/or proximity signal only in response to a local infrared or ultrasound communication from another device in the location system 100.

A sniffer circuit 26 may also be provided to control when the signals are transmitted by RFID tags Tags#1-#6, so that such signals are only transmitted when no other signals are being transmitted within location system 100, thus reducing the chance of collisions and providing timing for powering up receiver 25 to receive command and control information in battery operated applications such as tags, and/or to activate signal transmissions only when a location system 100 is detected via detecting that message traffic is occurring over a longer time interval. Persons skilled in the art shall recognize that sniffer 26 may first detect that RFID tags Tags#1-#6 are in the presence of a location system 100, and then determine when the location system 100 is momentarily silent before transmitting any signals, for example.

Each tag (e.g. each of Tags #1-#6) may include a Bluetooth (e.g. Bluetooth Low Energy, BLE) transmitter/receiver 35 configured to transmit signals originated by processor 24 via an antenna 35A. Persons skilled in the art shall recognize that the Bluetooth transmitter/receiver 35 can have separate transmitter and receiver modules, or be combined into a transceiver circuit. Preferably, the Bluetooth transmitter/receiver 35 is configured to transmit/receive signals in the Bluetooth Low Energy (BLE) communication protocol.

Each tag (e.g. of Tags#1-#6) may include a low frequency (LF) transmitter/receiver 36 that transmits/receives signals originated by processor 24 via an antenna 36A. Persons skilled in the art shall recognize that the LF transmitter/receiver 36 can have separate transmitter and receiver modules, or be combined into a transceiver circuit. Preferably LF transmitter/receiver 36 transmits and/or receives signals with a frequency between 30 kHz and 300 kHz (preferably around 125kHz - 134 kHz). Such signals may contain the transmitter's MAC address or ID, as well as additional transmitter information, for example.

Each tag (e.g. of Tags#1-#6) preferably has a piezoelectric speaker 29 that can generate at least one tone and/or tone pattern as instructed by processor 24. Tags#1-#6 may additionally or alternatively have a haptic motor 30 that can generate at least one vibration pattern as instructed by processor 24, for example.

Persons skilled in the art shall recognize that each tag (e.g. of Tags#1-#6) preferably has a battery 31 for powering any or all of the tag components described above. Having a battery 31 power LF transmitter/receiver 36 will ensure that the generated LF signals can travel farther than if Tags#1-#6 were powered passively by incoming radio signals, for example.

Location system 100 may locate the transmitter tags Tags#1-6 within multi area map A. Location receivers LR#1 and LR#4 may receive a wireless message signal from RFID tag Tag#3, for example. Location receivers LR#1 and LR#4 may calculate the location of RFID tag Tag#3 by measuring RSSI, TOA, TDOA and/or any other commonly used wireless location method. Additionally or alternatively, location receivers LR#1 and LR#4 may send the received message and/or additional RSSI/TOA/TDOA information to a central server CS1, which would then use the information to calculate the location of RFID tag Tag#3 within multi area map A. Persons skilled in the art are referred to US Patents Nos. US9632898, US7522049 and US7403108, and Patent Publication No. US2016100289, for example, for further information on commonly used wireless location methods.

Once the location of RFID tag Tag#3 is calculated, and the central server CS1 has received the RFID tag Tag#3 message and/or its location information from at least one of the location receivers LR#1 and LR#4, central server CS1 can then send the location information of RFID tag Tag#3 to a remote computer RC1 for display of its location within multi area map A. Such information can be sent to remote computer RC1 via the internet, preferably through a cloud computing system, for example.

Location system 100 may also include short range RFID transmitters or exciters EX#1, EX#2, EX#3, EX#4. Preferably, the exciters EX#1-EX#4 are low frequency (e.g. 125 kHz) exciters with a short range of up to few meters, and/or are ultrasound exciters configured to emit ultrasonic signals. It is preferable to provide a pair of exciters (e.g., EX#1-EX2) on each side of a door, for example. Persons skilled in the art shall recognize that transmitters/exciters EX#1-EX#4 may transmit at these and other frequencies (e.g. ultrasound, HF, VHF, and/or UHF bands) without departing from the scope of the present invention.

Each exciter EX#1-EX#4 may continuously or periodically broadcast messages which include their transmitter ID and an area ID, and optionally other parameters. For example, exciter EX#1 and EX#4 each transmit a message effectively stating that it is respectively located in Area #1 and Area #3, while exciters EX#2 and EX#3 each transmit a message effectively stating that it is located in Area #2.

As such, an RFID tag (Tag #1-#6) which is in the coverage range of one of the exciters (EX#1-EX#4) receives the corresponding area ID which is subsequently transmitted in every tag message. Accordingly, RFID tag Tag #1 which is in the coverage area of exciter EX#1 is programmed to transmit in its messages that it is effectively located at Area #1. Similarly, RFID tag Tag #2 which is in the coverage area of exciter EX#2 will transmit in all its messages that it is effectively located at Area #2.

RFID tag Tag#3 however will transmit in its messages that it is effectively located at Area #1, even though it is not in the coverage area of any of the exciters EX#1-EX#4, since this was the last programmed area for this specific tag Tag#3. Similarly, each of RFID tags Tags #4-#5 will transmit that it is effectively located at Area #2, RFID tag Tag #6 will transmit that it is effectively located at Area #3. Persons skilled in the art will note that it is not important how the RFID tags Tags #1-#6 move between the areas (Areas #1-#3), as each tag will include the last programmed area in its transmitted message(s). Persons skilled in the art will recognize that, with such implementation, location system 100 will have full and absolute area differentiation even when the RFID tag is not anymore in the coverage range of the exciters EX#1-EX#4.

In other preferred embodiments the concept of area ID is enhanced to consist of several hierarchical layers (e.g. map and cell, floor and room, building, floor and room). In this preferred embodiment, an exciter can program an RFID tag to send message transmissions with some or all of those layer identifiers (e.g. floor only, room only, floor and room, or any combination thereof).

Such methodology can be used to calculate the location of an RFID tag in a multilevel structure. FIG. 2 illustrates a two-floor building, each floor consisting of a general area called cell#1 and a closed room called cell#2. For example, Room #A-2 is Cell#2 in Floor A, while Room #B-2 is Cell #2 in Floor B. The movement between the floors is done through the staircase on the left side of each floor (as illustrated).

In this preferred embodiment four exciters EX#1-EX#4 are installed. Exciters EX#1 and EX#2 may be installed in a way that their coverage area includes both floors. Thus, an RFID tag entering into room A-2 or room B-2 is captured by exciter EX#1. Exciter EX#1 would program the RFID tag to send messages effectively stating that it is located in cell #2, with the previously stored floor information, i.e., without altering the previously stored floor information. Thus RFID tag Tag#1 in room A-2 will transmit floor #A and cell #2 while Tag #2 will transmit floor #B and cell #2.

As the RFID tag enters room A-1 or room B-1 from room A-2 or room B-2, respectively, such movement is captured by exciter EX#2. Exciter EX#2 would program the RFID tag to send messages effectively stating that it is located in cell #2, with the previously stored floor information, i.e., without altering the previously stored floor information.

In this preferred embodiment, an RFID tag moving from floor to floor will be programmed on the staircase and it will transmit the floor information that was last programmed. In other words, as the RFID tag however approaches exciter EX#3 and/or EX#4, the RFID tag would be programmed to transmit a message containing the cell information (cell #1) with the updated floor information (Floor A for exciter EX#3, Floor B for exciter EX#4).

It should be noted that the exciters EX#1-EX#4 can also be located in the proximity of elevators, passages, staircases, or any desired combination, or the like.

In other preferred embodiments, different exciters can be used to cover cells in different floors. In other preferred embodiments, cells or areas may or may not overlap, exciters can be installed in, and/or in the proximity of, more than one entrance or exit to a specific area, cell or floor, and tags can be configured as required by the application.

In addition, exciters can be programmed by the location system to dynamically change the broadcasted message to the tags. In this preferred embodiment, the areas or cells can be changed dynamically during system operation, thus achieving flexible definition of areas according to the application needs.

With either embodiment, location system 100 can be used to track contact between two individuals. In particular, as location system 100 calculates and tracks the locations of RFID tags (e.g. Tags#1-6), location system 100 may also keep track of the occasions when RFID tags (e.g. Tags#1-6) have come within a short distance of each other. If RFID tags (e.g. Tags#1-6) are carried by individuals, such events can be listed as possible contacts, e.g. for infectious disease contact tracing. Such possible contacts are preferably time-stamped, i.e., location system 100 can include in the contact record the time of when such possible contact occurred. Location system 100 may generate a report listing all the possible contacts between individuals for a particular time period, for example.

Such capability enables tracking possible contact between possibly infected individuals. By tracking all the individuals that were within close proximity of each other, it is easier to determine which individuals need to be contacted concerning possible infection.

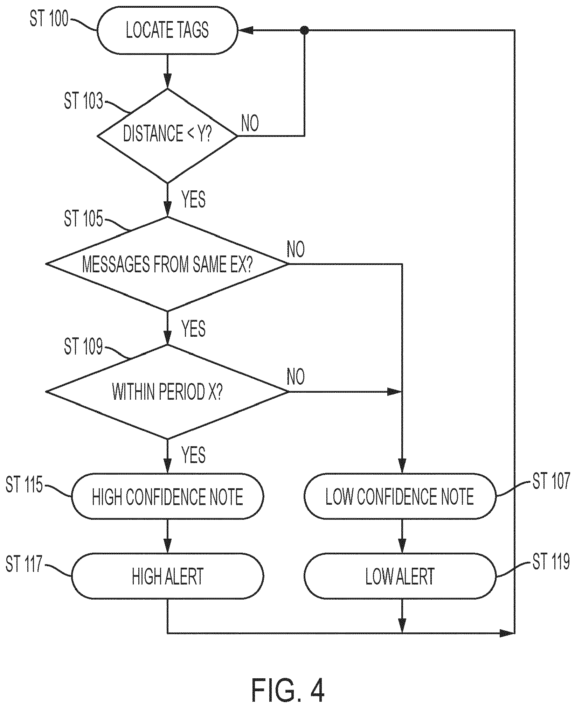

The contact record may also include a confidence value for each possible contact. FIG. 4 illustrates a method for determining the confidence value of such contacts. As stated above, location system 100 calculates the location of each individual RFID tag, e.g. of Tags#1-6 (ST100). Location system 100 analyzes whether the calculated position of two tags, e.g., Tags#1-2, are within a predetermined distance range Y (ST103). The distance range Y between tags can be up to 4 meters, and preferably up to 2 meters, for example.

Alternatively (or in addition), Tags#1-2 may determine that they are in close proximity to each other without assistance of central server CS1. In particular, Tag#1 may transmit Bluetooth, Bluetooth Low Energy (BLE), and/or other RF and/or LF, advertisement messages on a periodic basis for a period of time (e.g., every 100ms for 900ms) via the transmitter/receiver 35 and/or 36 and switch to receiving mode (e.g., for 100ms). As indicated in FIG. 3, transmitter/receiver 35 is a BLE transmitter/receiver, and transmitter/receiver 36 is a LF transmitter/receiver, for example. Persons skilled in the art shall recognize that allowing Tag#1-#6 to switch between transmitting and receiving modes, allows the tags to receive advertisements from other tags and enables the other tags to receive the advertisements transmitted by the message-originating tag, for example. When a tag receives an advertisement message, the tag preferably estimates the distance from the other tag based on Received Signal Strength Indicator (RSSI) based techniques.

Similarly, Tag#1 could send a message via the LF transmitter 36. Other tags that receive the LF message are thus within predetermined distance range Y as the range setting (or RSSI threshold) can be configured by Tag#1 or by location system 100.

If the distance is within the predetermined distance range Y, the tag can send a unidirectional Wifi or BLE (and/or other RF) message to central server CS1 of the possible contact. The tag can also store information of the possible contact in its storage 23. Such information may include the identity of the other tag, the related RSSI information, the time when the possible contact began, the time when the possible contact ended, etc.

The location system 100 may then check whether Tags#1-2 received a message from the same exciter (ST105). If not, then location system 100 adds the contact between the two tags as a possible contact with a low confidence value to the contact list (ST107).

However, if Tags#1-2 received a message from the same exciter, the location system 100 preferably checks whether the messages received from Tags#1-2 from the same exciter were received within time period X (ST109). Preferably time period X is below 10 minutes and preferably below 5 minutes, for example.

If such messages were received within time period X, location system 100 adds the contact between the two tags as a possible contact with a high confidence value to the contact list (ST115). Otherwise, location system 100 adds the contact between the two tags as a possible contact with a low confidence value to the contact list (ST107).

If Tags#1-#6 have a piezoelectric speaker 29 and/or a haptic motor 30, location system 100 can instruct processor 24 to activate piezoelectric speaker 29 and/or haptic motor 30 when a possible contact between 2 tags is calculated. Accordingly, individuals wearing these tags will get a sound and/or vibration alert from their tag that another tag is in close proximity to them. Preferably, piezoelectric speaker 29 may generate multiple tones or tone patterns. Similarly, haptic motor 30 may generate multiple vibration patterns. Location system 100 can then activate a particular tone/tone pattern and/or vibration pattern for possible contacts with high confidence value (ST117) and a different tone/tone pattern and/or vibration pattern for possible contacts with low confidence value (ST119).

Location system 100 continues monitoring the tag locations, and notes when the close proximity between Tags#1-#2 ends. Location system 100 can store in its memory the tags involved in the possible contact, as well as the length of the possible contact.

While the invention has been particularly shown and described with reference to preferred embodiments and implementations thereof, it will be understood by those skilled in the art that the foregoing and other changes in form and details may be made therein without departing from the scope of the claims.

## Claims

1. A location system, comprising: multiple RFID tags, each RFID tag configured to transmit, in response to a detected stimulus or periodically at predetermined intervals, a wireless message signal that includes an identifier of the RFID tag; multiple location receivers, each location receiver configured to receive the wireless message signals from the RFID tags and to measure RFID tag location information from the wireless message signals; and a central server configured to receive the RFID tag messages and/or the measured RFID tag location information; wherein at least one of the central server and the location receivers is configured to calculate the locations of the RFID tags using the wireless message signals and/or the measured RFID tag location information.

2. A location system according to Claim 1, wherein each RFID tag is configured to transmit a MAC address or other identifier of the RFID tag.

3. A location system according to Claim 1 or Claim 2, further comprising short-range exciters, each configured to transmit messages which include an identifier of the exciter and the area of location of the exciter, said messages being receivable by the RFID tags.

4. A location system according to Claim 3, wherein each short-range exciter is configured to transmit a low frequency RF signal and/or an ultrasonic signal.

5. A location system according to Claim 4, wherein the low frequency signal has a frequency of substantially 125 kHz.

6. A location system according to any one of claims 3 to 5, wherein the RFID tags are configured such that each RFID tag which is in a coverage area of a short-range exciter transmits in its wireless message signals an identifier to the effect that it is located in the area of location of the short-range exciter.

7. A location system according to any one of claims 3 to 6, wherein the messages transmitted by each short-range exciter have information representative of at least one of the building, floor, and room, in which the short-range exciter is located in use.

8. A location system according to any preceding claim, wherein each RFID tag is configured to emit low frequency RF and/or Bluetooth (e.g. BLE) signals and to record the received signal strength indication (RSSI) of received corresponding low frequency RF and/or Bluetooth (e.g. BLE) signals from other RFID tags.

9. A location system according to Claim 8, wherein each RFID tag is configured to emit a wireless proximity or contact detection signal for receipt by the central server, in the event that the received signal strength indication (RSSI) exceeds a predetermined threshold value indicative of another RFID tag being within a predetermined distance range.

10. A location system according to Claim 9, wherein each RFID tag is configured to store information of the possible contact in internal storage of the RFID tag, such information preferably including the identity of the other tag, the related RSSI information, the time when the possible contact began, and the time when the possible contact ended.

11. A location system according to any preceding claim, configured to keep track of occasions when RFID tags came within proximity of each other.

12. A location system according to Claim 11, wherein, in use, the RFID tags are carried by individuals, and the proximity event occasions are recorded as possible contacts, preferably including the time that each possible contact occurred.

13. A location system according to Claim 9 or Claim 10 when dependent upon Claim 3, wherein the central server is configured to check whether the two RFID tags both received a message from the same short-range exciter.

14. A location system according to Claim 13, wherein the central server is configured to record a high confidence value that the two RFID tags were in proximity to each other, in the event that the RFID tags both received a message from the same short-range exciter within a predetermined time period.

15. A location system according to any preceding claim, wherein each RFID tag is configured to provide an indication of proximity to another RFID tag, wherein the indication is at least one of an audio signal from a piezoelectric speaker and a haptic vibration from a haptic motor.
